# EUROPEAN PATENT SPECIFICATION

(11) **EP 3 138 986 B1**
(45) Date of publication and mention of the grant of the patent: **13.09.2017**
(21) Application number: 15750081.0
(22) Date of filing: 06.07.2015
(51) Int. Cl.: E05F 11/48

(54) **WINDOW LIFT OPERATED BY STRUCTURAL CABLES FOR VEHICLE DOORS**
DURCH STRUKTURKABEL BETRIEBENER FENSTERHEBER FÜR FAHRZEUGTÜREN
LÈVE-GLACE À CÂBLE STRUCTURAL POUR PORTIÈRES DE VÉHICULES

(43) Date of publication of application: 08.03.2017
(73) Proprietor: Grupo Antolin-Ingenieria, S.A., 09007 Burgos (ES)
(72) Inventor: NEBREDA DE LA IGLESIA, Félix, 09007 Burgos (ES); REVILLA LÓPEZ, Fernando, 09007 Burgos (ES)
(74) Representative: Capitán García, Maria Nuria
(86) International application number: PCT/ES2015/070523
(87) International publication number: WO 2017/005940

(56) References cited:
- FR-A1- 2 964 347
- US-B1- 6 354 652

## Description

### FIELD OF THE INVENTION

The present invention relates to a structural cable window lifter for vehicle doors, specifically a cable window lifter with a double structural guide rail incorporating other functional components such as the attachment means for the inner door handle, such that in a mounted position on the structure of the vehicle door, the structural cable window lifter and the door decorative panel are connected through said inner door handle.

Said structural cable window lifter comprises a strong structure that supports and transmits the loads generated during the operation of the window lifter, and/or the inner door handle, on the door structure through the guide rails, which are the only components of the structural cable window lifter joined to said door structure.

### BACKGROUND OF THE INVENTION

One of the most important objectives when designing the various components of a vehicle is reducing weight.

Consequently, this is one of the problems to address when designing vehicle doors, the weight reduction being more advantageous in doors with large dimensions.

One of the ways to reduce the weight of the door is to eliminate the metal sheet configuring the central part of the inner skin of the door structure that is closest to the interior of the vehicle, the structural importance thereof is smaller than that of the rest of the surface configuring the inner skin, resulting in an inner skin with a large central opening.

This weight reduction results in less space being available to attach the various functional elements that form part of the door and which require the presence of a strong structure that can withstand the loads generated during the use of the door, such as to attach the interior handle of the door.

One of the solutions for compensating said lack of space is using other functional components common in vehicle doors to turn them into structural components that can fulfill more than one function on a single support, such that they also support and transmit the loads generated during the use of said functional components on the door structure.

Specifically, one of the common functional components is the window lifter and, in the specific case of doors with large dimensions, a double rail cable window lifter represents an economic solution.

In addition, the use of a plastic material to configure a structure window lifter that also incorporates other functional components allows integrating components or parts thereof on the same, thereby simplifying the assembly process. In this way, the solution using a double rail cable window lifter made of plastic is even more economical.

As part of the solution one possible configuration is connecting the two guide rails to each other, such as through a third component forming a single part. In this case specifically the third component can withstand and transmit the loads derived from the operation of the functional elements attached to it to the door structure.

A known example showing a structural window lifter is patent WO2012056137. Another example of a structural window lifter is disclosed in FR2964347. In this case the window lifter comprises two guide rails joined to the door structure and a structural element to which are attached among other elements the window lifter driving means and the inner door handle, wherein said structural element connects the guide rails and, as these, is also joined to the door structure.

Therefore, in this specific case the structural element joined to the structure of the door withstands and transmits directly the loads generated by the use of the inner door handle on the door structure.

However, in cases in which said structural element is not connected directly to the door structure but instead is connected only through the window lifter guide rails, the loads generated by tightening the cable that connects one of the upper redirection means placed on the guide rails and the cable winding drum connected to the driving means, which is the most unfavorable segment of the cable path with regard to generation of loads due to the weight of the window during the window raising operation, results in a change in the distance that separates said redirection means and the cable winding drum during the operation of the window lifter, thereby deforming the window lifter.

This phenomenon becomes a greater problem if the window lifter and the door panel are joined by the inner door handle, such that said window lifter deformations are transmitted to the door panel accessible to the occupant, who can perceive the deformations of the window lifter through said door panel.

In view of the above, the subject matter of the invention relates to a structural cable window lifter for large doors which, in addition to allowing reducing the weight of the vehicle door in an economic manner, allows integrating the attachments of the door handle without the vehicle occupant perceiving the deformations made in the structural cable window lifter through the door panel.

### DESCRIPTION OF THE INVENTION

The present invention is established and characterized in the independent claim, while the dependent claims describe additional features thereof.

Firstly, the configuration of the invention allows reducing the weight of the door without changing the usual position of any of the functional components characteristic of a conventional vehicle door, and therefore without changing the design of the interior of the vehicle and specifically of the door panel.

In addition, the presence of strong elements with structural continuity from the area where the loads are generated to the area where these are transmitted to the door structure through the guide rails allows providing an attachment area for the inner door handle that can withstand and transmit said loads to the door structure.

In addition, the configuration of the invention allows withstanding and resisting the loads generated by the cable tension in the most unfavorable segment of the kinematic chain of the window lifter, maintaining the separation between the ends of said most unfavorable cable segment, thereby preventing the deformation of the structural cable window lifter and consequently preventing the movement of the attachment area of the inner door handle.

In this way the vehicle occupant will not perceive any anomalous movement of the door panel resulting from it being connected to the structural cable window lifter through said inner door handle.

Finally, the selection of plastic material to manufacture a structural double guide rail cable window lifter represents an economic solution, as in addition to being able to perform the functions characteristic of a window lifter when the window has large dimensions, also allows integrating components of parts thereof, simplifying the mounting process for the same.

### DESCRIPTION OF THE DRAWINGS

The present specification is completed by a set of figures illustrating a preferred embodiment, in no way meant to limit the invention.
Figure 1 shows a front view of the structural cable window lifter and the kinematic chain thereof, indication section AA.
Figure 2 shows a cross-sectional view along AA as represented in figure 1 of the second structural element.
Figure 3 shows an exploded view of a vehicle door, representing the door structure with the door panel and the structural cable window lifter, connected through the inner door handle.

### DETAILED DESCRIPTION OF THE INVENTION

Double guide rail cable window lifters are well known in the prior art. They comprise two approximately parallel guide rails that guide carriages joined to the window and pulled along said guide rails by a cable, which in turn consists of several cable segments, redirected at the ends of the guide rails and driven by driving means placed between the guide rails, which comprise a cable winding drum, that make the window move up and down.

Specifically, in the present invention the cable (10) meant to pull the window works under tension in at least one segment (10.1) thereof, particularly in segment (10.1) connecting the cable redirection means (8.1) located on the upper end of the first guide rail (2) and the cable winding drum (7.1) that forms part of the winding means (7).

In this cable segment (10.1) is where the highest loads are generated compared to those generated in the remaining cable segments (10) that form the window lifter kinematic chain. These loads tend to join the positions of each upper redirection means and the cable winding drum connected to the driving means, thereby deforming the structural cable window lifter.

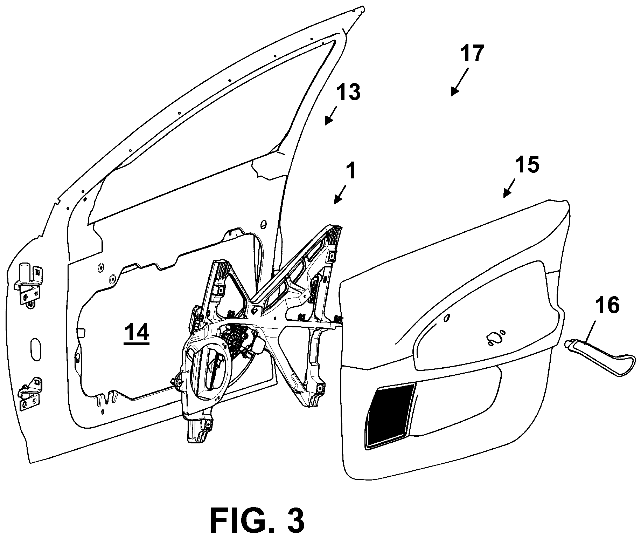

As shown in figure 3, both the structural cable window lifter (1) and the door panel (15) that provides an aesthetic appearance to the door (17) are attached to a structure of the vehicle door (13) which has a large central opening (14), in this case with the specific feature that the structural cable window lifter (1) and the door panel (15) are connected through the inner door handle (16), such that the vehicle occupant perceives the deformations made in the structural cable window lifter (1) through the door panel (15), due to the loads exerted on said more unfavorable cable segment (10.1).

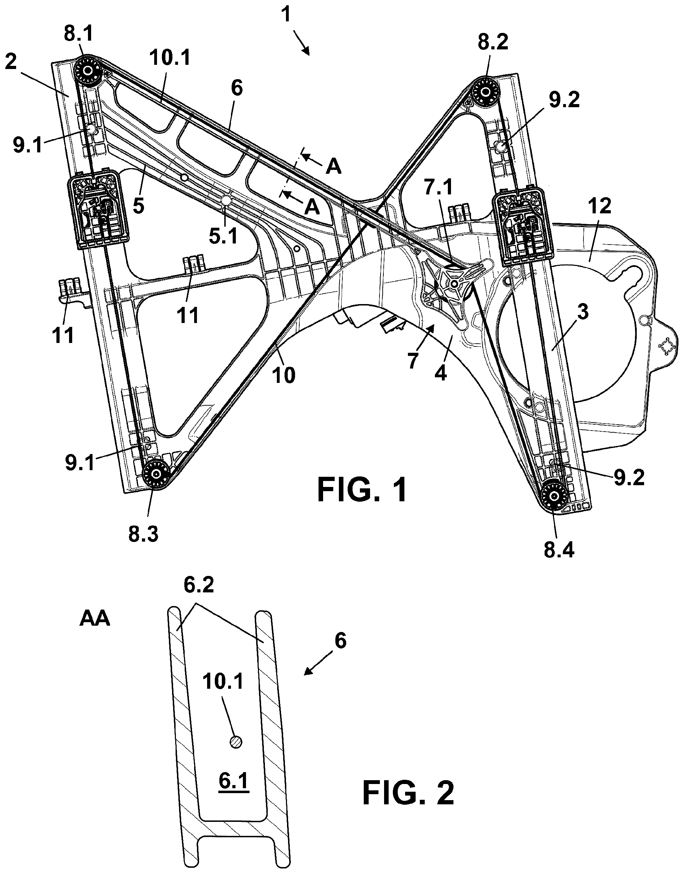

Specifically, the structural cable window lifter (1) of the invention represented in figure 1 comprises the elements described below:
A first guide rail (2) that comprises first cable redirection means (8.1) placed at the upper end thereof, second cable redirection means (8.3) placed at the lower end thereof and first attachment means (9.1) for the first guide rail (2) to the vehicle door.

A second guide rail (3) comprising third and fourth cable redirection means (8.2, 8.4), located respectively on the upper and lower ends, and second attachment means (9.2) for the second guide rail (3) to the structure of the vehicle door (13). The position corresponding to the upper and lower ends of the guide rails refers to the position of said ends once the structural cable window lifter (1) has been attached to the structure of the vehicle door (13).

Moreover, the structural cable window lifter (1) comprises a first element (4) that connects said first and second guide rail (2, 3) which comprises a continuous structural portion (5) provided with attachment means (5.1) for the inner door handle (16), such that said structural portion (5) has structural continuity from the inner door handle (16) where the loads generated by using the inner door handle (16) are generated, to the guide rails (2, 3) where the loads are transmitted to the structure of the vehicle door (13) through the attachment means (9.1, 9.2). That is, the structural portion (5) has structural continuity because it can withstand and transmit the loads from the inner door handle (16) to the guide rails (2,3).

As shown in figure 1, in a specific case the structural behavior of the structural portion (5) of the first element (4) is determined by a ribbed shape extending continuously from the first guide rail (2) to the second guide rail (3), passing through the attachment means (5.1) of the inner door handle (16).

In addition, said structural portion (5) can have other geometrical configurations, as well as other constructive solutions, to ensure the structural performance thereof, such as a configuration with a cross section providing a greater moment of inertia along the direction of the loads generated by using the inner door handle, or an increased thickness along the length thereof, or include additional reinforcement materials such as mats of a fibrous material such as fiber glass, blended with plastic material.

Furthermore, according to a specific embodiment of the invention not represented in the figures, the first element (4) could be completely structural and therefore coincide with the structural portion (5).

In addition, the structural cable window lifter (1) includes driving means (7) that comprise a cable winding drum (7.1), placed between the first guide rail (2) and the second guide rail (3) and connected to the first element (4), either on the structural portion (5) or on a non-structural portion thereof.

The structural cable window lifter (1) also comprises a second continuous structural element (6) that connects the first guide rail (2) to the first element (4) and runs along a segment (10.1) of the cable (10) placed between the first redirection means (8.1) and the cable winding drum (7.1), this second continuous structural element (6) being able to maintain the distance between the first redirection means (8.1) and the cable winding drum (7.1) constant during the window raising and lowering movements.

As shown in the cross-sectional view of figure 2, in a specific case the structural performance of the second continuous structural element (6) is determined by a shape thereof configured by two walls (6.2) that define a cavity (6.1) which houses the cable segment (10.1) that runs from the first cable redirection means (8.1) to the cable winding drum (7.1), and wherein said walls (6.2) project perpendicular to the main surface of the structural cable window lifter (1), in turn defined by the shape of the guide rails (2, 3) defining a U-shaped section.

In this way, the cross-section of the second continuous structural element (6) has a greater moment of inertia along the direction of the loads generated due to the tension of the cable (10) in said segment (10.1) that it must withstand.

In addition, said second continuous structural element (6) could present other geometrical configurations, as well as other constructive solutions in order to ensure the structural performance thereof, such as a ribbed configuration or an increased thickness thereof along its length, or comprise additional reinforcement materials such as mats of a fibrous material such as fiber glass, blended with plastic material.

Consequently, the configuration of the structural cable window lifter (1) of the invention is established by a structural assembly configured as a single piece of plastic material comprising the first guide rail (2), the second guide rail (3), the first element (4) with a structural portion (5) and the second continuous structural element (6).

The minimum components comprising the structural cable window lifter (1) of the invention have been described and enumerated. However, according to other embodiments the structural cable window lifter (1) could integrate other components, such as clips (11) for attaching and guiding the electrical wire or means for attaching a speaker (12), as well as other non-structural plastic portions to support said components (11, 12), and can include other components such as the electrical wire, impact absorption means, a lock, etc.

## Claims

1. Structural cable window lifter for vehicle doors comprising:
a first guide rail (2) comprising first cable redirection means (8.1) on the upper end thereof, second cable redirection means (8.3), and first attachment means (9.1) for the first guide rail (2) to a structure of the vehicle door (13);
a second guide rail (3) comprising third and fourth cable redirection means (8.2, 8.4), and second attachment means (9.2) for the second guide rail (3) to the structure of the vehicle door (13);
a first element (4) connecting said first and second guide rails (2,3);
driving means (7) comprising a cable winding drum (7.1) placed between the first guide rail (2) and the second guide rail (3) and connected to the first element (4);
**characterized in that**
the first element (4) comprises a structural portion (5) that includes attachment means (5.1) for the inner door handle (16), such that said structural portion (5) has structural continuity from the inner door handle (16) where the loads resulting from the use of said inner door handle (16) are generated, to the guide rails (2,3) where the loads are transmitted to the structure of the vehicle door (13) through the attachment means (9.1, 9.2) wherein the structural behavior of the structural portion (5) of the first element (4) is determined by:
• a ribbed shape extending continuously from the first guide rail (2) to the second guide rail (3), passing through the attachment means (5.1) of the inner door handle (16), or
• a configuration with a cross section providing a greater moment of inertia along the direction of the loads generated by using the inner door handle (16), or
• an increased thickness along the length the structural portion (5), or
• include additional reinforcement materials;
the structural cable window lifter (1) also comprises a second continuous structural element (6) that joins the first guide rail (2) to the first element (4), and runs along a segment (10.1) of the cable (10) located between the first redirection means (8.1) and the cable winding drum (7.1), said second continuous structural element (6) being able to maintain the distance between the first redirection means (8.1) and the cable winding drum (7.1) constant during the window raising and lowering movements wherein the structural performance of the second continuous structural element (6) is determined by:
• a shape thereof configured by two walls (6.2) that define a cavity (6.1) which houses the cable segment (10.1) that runs from the first cable redirection means (8.1) to the cable winding drum (7.1), and wherein said walls (6.2) project perpendicular to the main surface of the structural cable window lifter (1), in turn defined by the shape of the guide rails (2, 3) defining a U-shaped section, or
• a ribbed configuration or,
• an increased thickness of the second continuous structural element (6) along its length, or
• comprising additional reinforcement materials;
the first guide rail (2), the second guide rail (3), the first element (4) with a structural portion (5) and the second continuous structural element (6) form a structural assembly made of a single piece of plastic material.

2. Structural cable window lifter for vehicle doors according to claim 1, wherein the first element (4) and the structural portion (5) of the first element (4) coincide.

3. Structural cable window lifter for vehicle doors according to claim 1 comprising additional integrated components such as clips (11) for attaching and guiding an electrical wire, means for attaching a speaker (12), or other non-structural plastic portions to support said components (11, 12).

## Patentansprüche

1. Struktur-Seilfensterheber für Fahrzeugtüren, umfassend:
eine erste Führungsschiene (2) mit ersten Seilumlenkmitteln (8.1) an ihrem oberen Ende, zweiten Seilumlenkmitteln (8.3) und ersten Befestigungsmitteln (9.1) für die erste Führungsschiene (2) an einer Struktur der Fahrzeugtür (13);
eine zweite Führungsschiene (3) mit dritten und vierten Seilumlenkmitteln (8.2, 8.4) und zweiten Befestigungsmitteln (9.2) für die zweite Führungsschiene (3) an der Struktur der Fahrzeugtür (13);
ein erstes Element (4), das die erste und zweite Führungsschiene (2, 3) verbindet;
Antriebsmittel (7) mit einer zwischen der ersten Führungsschiene (2) und der zweiten Führungsschiene (3) angeordneten und mit dem ersten Element (4) verbundenen Seilwickeltrommel (7.1);
**dadurch gekennzeichnet, dass**
das erste Element (4) einen Strukturabschnitt (5) umfasst, der Befestigungsmittel (5.1) für den inneren Türgriff (16) umfasst, so dass der Strukturabschnitt (5) strukturelle Kontinuität von dem inneren Türgriff (16), wo die Belastungen, die sich aus der Verwendung des inneren Türgriffs (16) ergeben, erzeugt werden, zu den Führungsschienen (2, 3), wo die Belastungen durch die Befestigungsmittel (9.1, 9.2) auf die Struktur der Fahrzeugtür (13) übertragen werden, aufweist, wobei das Strukturverhalten des Strukturabschnitts (5) des ersten Elements (4) bestimmt ist durch:
• eine Rippenform, die sich kontinuierlich von der ersten Führungsschiene (2) zu der zweiten Führungsschiene (3) erstreckt, wobei sie durch die Befestigungsmittel (5.1) des inneren Türgriffs (16) verläuft, oder
• eine Ausgestaltung mit einem Querschnitt, der ein größeres Trägheitsmoment entlang der Richtung der Belastungen, die durch die Verwendung des inneren Türgriffs (16) erzeugt werden, bereitstellt, oder
• eine erhöhte Dicke entlang der Länge des Strukturabschnitts (5), oder
• das Hinzufügen von zusätzlichen Verstärkungsmaterialien;
der Struktur-Seilfensterheber (1) umfasst auch ein zweites kontinuierliches Strukturelement (6), das die erste Führungsschiene (2) mit dem ersten Element (4) verbindet und entlang eines zwischen dem ersten Umlenkmittel (8.1) und der Seilwickeltrommel (7.1) angeordneten Segments (10.1) des Seils (10) verläuft, wobei das zweite kontinuierliche Strukturelement (6) während der Fensterhebe- und Absenkbewegungen den Abstand zwischen den ersten Umlenkmitteln (8.1) und der Seilwickeltrommel (7.1) konstant halten kann, wobei die strukturelle Leistung des zweiten kontinuierlichen Strukturelements (6) bestimmt ist durch:
• eine Form davon, die durch zwei Wände (6.2) ausgestaltet ist, die einen Hohlraum (6.1) definieren, der das von den ersten Seilumlenkmitteln (8.1) zu der Seilwickeltrommel (7.1) verlaufende Seilsegment (10.1) aufnimmt, und wobei die Wände (6.2) senkrecht zu der Hauptfläche des Struktur-Seilfensterhebers (1) hervorstehen, die wiederum durch die Form der Führungsschienen (2, 3), die einen U-förmigen Querschnitt definieren, definiert ist, oder
• eine Rippenausgestaltung, oder
• eine erhöhte Dicke des zweiten kontinuierlichen Strukturelements (6) entlang seiner Länge, oder
• das Umfassen von zusätzliche Verstärkungsmaterialien;
die erste Führungsschiene (2), die zweite Führungsschiene (3), das erste Element (4) mit einem Strukturabschnitt (5) und das zweite kontinuierliche Strukturelement (6) bilden eine aus einem einzigen Stück Kunststoffmaterial gefertigte strukturelle Anordnung.

2. Struktur-Seilfensterheber für Fahrzeugtüren nach Anspruch 1, wobei das erste Element (4) und der Strukturabschnitt (5) des ersten Elements (4) übereinstimmen.

3. Struktur-Seilfensterheber für Fahrzeugtüren nach Anspruch 1, umfassend zusätzliche integrierte Komponenten wie Klammern (11) zum Befestigen und Führen eines elektrischen Drahtes, Mittel zum Befestigen eines Lautsprechers (12) oder andere nicht strukturelle Kunststoffabschnitte zur Abstützung der Komponenten (11, 12).

## Revendications

1. Lève-vitre à câble structurel pour portières de véhicule, comprenant :
un premier rail de guidage (2) comprenant un premier moyen de redirection de câble (8.1) sur son extrémité supérieure, un deuxième moyen de redirection de câble (8.3) et un premier moyen de fixation (9.1) pour le premier rail de guidage (2) sur une structure de la portière de véhicule (13) ;
un second rail de guidage (3) comprenant des troisième et quatrième moyens de redirection de câble (8.2, 8.4) et un second moyen de fixation (9.2) pour le second rail de guidage (3) sur la structure de la portière de véhicule (13) ;
un premier élément (4) reliant lesdits premier et second rails de guidage (2, 3) ;
un moyen d'entraînement (7) comprenant un tambour d'enroulement de câble (7.1) placé entre le premier rail de guidage (2) et le second rail de guidage (3) et relié au premier élément (4) ;
**caractérisé en ce que**
le premier élément (4) comprend une portion structurelle (5) qui comprend un moyen de fixation (5.1) pour la poignée de portière interne (16), de sorte que ladite portion structurelle (5) présente une continuité structurelle depuis la poignée de portière interne (16) où les charges résultant de l'utilisation de ladite poignée de portière interne (16) sont produites jusqu'aux rails de guidage (2, 3) où les charges sont transmises à la structure de la portière de véhicule (13) par le biais des moyens de fixation (9.1, 9.2), dans lequel le comportement structurel de la portion structurelle (5) du premier élément (4) est déterminé par :
• une forme nervurée s'étendant de façon continue depuis le premier rail de guidage (2) vers le second rail de guidage (3) passant à travers le moyen de fixation (5.1) de la poignée de porte interne (16) ou
• une configuration avec une section transversale fournissant un moment d'inertie supérieur le long de la direction des charges produites par l'utilisation de la poignée de portière interne (16) ou
• une épaisseur accrue le long de la longueur de la portion structurelle (5) ou
• l'intégration de matériaux de renfort supplémentaires ;
le lève-vitre à câble structurel (1) comprend en outre un second élément structurel continu (6) qui relie le premier rail de guidage (2) au premier élément (4) et s'étend le long d'un segment (10.1) du câble (10) situé entre le premier moyen de redirection (8.1) et le tambour d'enroulement de câble (7.1), ledit second élément structurel continu (6) étant apte à maintenir la distance entre le premier moyen de redirection (8.1) et le tambour d'enroulement de câble (7.1) constante pendant les mouvements d'élévation et d'abaissement de vitre, dans lequel les performances structurelles du second élément structurel continu (6) sont déterminées par :
• une forme associée configurée par deux parois (6.2) qui définissent une cavité (6.1) qui loge le segment de câble (10.1) qui s'étend depuis le premier moyen de redirection de câble (8.1) vers le tambour d'enroulement de câble (7.1) et dans lequel lesdites parois (6.2) font saillie de façon perpendiculaire à la surface principale du lève-vitre à câble structurel (1), définie à son tour par la forme des rails de guidage (2, 3) définissant une section en forme de U ou
• une configuration nervurée ou
• une épaisseur accrue du second élément structurel continu (6) le long de sa longueur ou
• l'intégration de matériaux de renfort supplémentaires ;
le premier rail de guidage (2), le second rail de guidage (3), le premier élément (4) avec une portion structurelle (5) et le second élément structurel continu (6) forment un ensemble structurel constitué d'une seule pièce de matière plastique.

2. Lève-vitre à câble structurel pour portières de véhicule selon la revendication 1, dans lequel le premier élément (4) et la portion structurelle (5) du premier élément (4) coïncident.

3. Lève-vitre à câble structurel pour portières de véhicule selon la revendication 1, comprenant des composants intégrés supplémentaires tels que des attaches (11) pour fixer et guider un fil électrique, un moyen de fixation d'un haut-parleur (12) ou d'autres portions en plastique non structurelles afin de supporter lesdits composants (11, 12).
